# EUROPEAN PATENT SPECIFICATION

(11) **EP 3 055 562 B1**
(45) Date of publication and mention of the grant of the patent: **21.03.2018**
(21) Application number: 13818010.4
(22) Date of filing: 08.10.2013
(51) Int. Cl.: F03G 6/06

(54) **CONTROLLED HEATING METHOD OF A PROCESS FLUID THROUGH CONCENTRATING SOLAR THERMAL PLANT AND HEAT CARRIER SYSTEM AND APPARATUS THEREOF**
GESTEUERTES HEIZVERFAHREN FÜR EINE PROZESSFLÜSSIGKEIT DURCH KONZENTRIEREN EINER SOLARTHERMISCHEN ANLAGE SOWIE WÄRMETRÄGERSYSTEM UND VORRICHTUNG DAFÜR
PROCÉDÉ DE CHAUFFAGE CONTRÔLÉ D'UN FLUIDE DE TRAITEMENT PAR LE BIAIS D'UNE CENTRALE SOLAIRE THERMIQUE À CONCENTRATION ET D'UN SYSTÈME CALOPORTEUR ET APPAREIL ASSOCIÉ

(43) Date of publication of application: 17.08.2016
(73) Proprietor: KT - Kinetics Technology S.p.A., 00148 Roma (IT)
(72) Inventor: IAQUANIELLO, Gaetano, I-00153 Roma (IT); VINCI, Francesco, I-00179 Roma (IT); MOSCA, Lorena, I-00191 Roma (IT)
(74) Representative: Sarpi, Maurizio
(86) International application number: PCT/IT2013/000273
(87) International publication number: WO 2015/052733

(56) References cited:
- WO-A2-2009/034577
- US-A1- 2010 237 291
- US-A1- 2013 098 036

## Description

### Field of the invention

The present invention relates to the field of concentrating solar thermal plants and their application in the traditional refining and petrochemical sector for heating service purpose. Heating services in refining and petrochemical sectors, are those normally realized by means of fired heaters with fuel consumption and combustion products released to the atmosphere. Refinery fluids like petroleum, or its fractions or derivatives, or petrochemical process fluids that need to be heated up to a controlled process temperature may be heated up by means of solar heat absorbed and stored through a concentrating solar thermal plant (preferably the type based on parabolic trough concentrators and receivers and molten salts circulation and storage) with a considerable fuel saving and emission reduction (CO2, SOx, NOx, dusts and unburned compounds). Main advantage of solar plants application is to reduce the overall use of fossil fuels which should be, a part from a mere economic saving, one target of the sustainable development of industrial countries, now suffering from a too heavy environmental impact of industrial activities and trying to transform their economy toward a larger use of renewable energy. Introducing solar energy application in conventional industrial sectors could be strategic for reaching an economy of scale and therefore allowing a wider and faster spread of thermal solar system.

The use of solar energy in place of fossil fuels has a double benefit on global warming, first deriving from direct reduction of fossil fuels consumption and related greenhouse gases emissions, second by reduction of the solar energy reflected by earth in the infrared, being this last one of the main contribute to greenhouse effect.

### Background of the invention

Concentrating thermal solar plant utilizes a "radiation concentrator collector" which concentrates the solar radiation by focusing it into a smaller area, using mirrored surfaces. In this system, a reflector, which is typically parabolic, receives and reflects (focuses) incoming solar radiation into a radiation absorber, which is formed as a tube. The tube radiation absorber is conventionally surrounded by a treated glass enclosure tube to limit the loss of heat and the space between the tube radiation absorber and the glass enclosure tube is under vacuum.

The tube radiation absorber is made of metal with a coating having a high solar radiation absorption coefficient to maximize the energy transfer from the solar radiation reflecting off the reflector. A thermal fluid constituting a heat transport medium (either a diathermic oil or molten salts; molten salts mixture is preferred in this case due to the higher temperature that can be reached by the thermal fluid in the solar field) flows within the tube radiation absorber and can reach temperatures up to 580 °C with conventional molten salts mixture based on Na and K Nitrates.

The thermal energy is then transported by the thermal fluid toward end users (most commonly steam generators and super-heaters for electric power generation) and is in part stored in a storage tanks system in order to extend the operation time. The storage system consists of a minimum of two storage tanks, a cold fluid storage and a hot one. The solar heat absorbed and stored in the CSP system can be than carried in different ways, have different use, and can be eventually integrated with a firing contribute to compensate the solar system variations before distribution to selected users.

Main applications of concentrating solar system already realized are in the field of electric power generation by using hot oil which in turn is used for generating high pressure steam generation and superheating which is then expanded in a steam turbine. More recently the use of molten salts was introduced as a way to raise the Rankine cycle efficiency (cit. Patent Application N° EP12167509.4 filed on May 10th 2012) and reduce the cost of thermal energy storage (TES).

Recent pilot projects' applications funded by EC include the Mats project where power, sea water and cold are produced and Comethy project where hydrogen is produced by a low temperature steam reforming process heated by molten salts and integrated with membrane separation (cit. Patent Application N° EP12159998.9 filed on March 16th 2012).

Concentrating solar system have at present a high investment cost but can significantly reduce the operating cost in those application where heat required is generated by firing a fuel stream, as it is in conventional heating services of refineries and petrochemical operations.

As a background to present invention there are also known applications of Heat Recovery Units (HRU) for heating refinery fluids, based on use of Gas Turbines exhaust streams. In this case the exhaust stream is fully discharged to stack after heat recovery, at a temperature which depends on the heating service temperature level, usually in the range of 150°C-300°C, with very large heat dispersion.

With the present invention this is avoided, because a large part of the heat carrier stream downstream heating service is recycled back to the heat carrier circuit, while only a part of the total stream, corresponding to the inlet fuel for post-firing and fresh combustion air, is sent to stack.

### Summary of the invention

The present invention refers to one specific application of concentrating solar thermal plant, based on molten salt circulation and storage, where the solar heat absorbed by collectors and receivers and stored in the storage system is transferred to an air stream used as a heat carrier, it is eventually integrated/substituted with post-firing under continuous duty control function, and it is finally conveyed to a heat exchanger where it is transferred to a process fluid. Any heating service for refinery fluids, petrochemical process fluids, demineralized/boiler feed water for steam generation and steam superheating actually realized through fired heaters is suitable for the application of present invention.

One general problem of concentrating thermal solar plant is that of having a variable content of heat available, due to variability of sun radiation along with day time, weather condition, season and geography. If solar heat is to be used for a heating service under temperature controlled conditions, it has to be integrated with a variable heat producing system that is capable to provide the supplementary heat required in a controlled and viable manner.

US 2013/098036, which is considered as the closest prior art, discloses a system and method that uses both solar and non-solar generated thermal energy to heat the working fluid in a Rankine cycle power plant. The solar radiation is collected, transported and directed into a heating vessel (e.g., a boiler), via an optical collection and transmission system. The optical collection system may comprise a solar radiation concentration system, such as parabolic dish or solar trough, that concentrates and focuses solar radiation upon a solar collector. The optical transmission system may comprise a fiber optic system or light tube that transmits solar radiation from the solar collector to a thermal distributor that converts the solar radiation to solar thermal energy. Heat from the thermal distributor is used to augment the heating of the working fluid inside of the boiler, or, if preferred, before entry to the boiler. However this solution requires elaborate structures to support the heat transfer fluid (HTF) and does not provide the control of the supplementary heat available during the different operating phases of the concentrating solar plant.

Object of present invention is the architecture and method of supplying solar heat to a refinery or process fluid by means of an intermediate heat carrier circuit having the capacity of integrate the variable heat required by process heating service through post-firing. To do this, an air stream, used as a heat carrier between molten salts and final user, is heated up by hot molten salts circulating from solar plant up to a temperature in the range between 480°C and 550°C, typically 500°C during the 'active phase' (phase 1) when direct sun radiation is heating molten salts and during the 'storage phase' (phase 2) when the hot molten salts are taken from the hot storage tank and then discharged in the cold storage tank. During the 'inactive phase' (phase 3) of the solar field the heat carrier air stream is instead heated up through post-firing, realized by means of duct burners, firing a suitable fuel (refinery gas, natural gas, bio-fuel or any mixture of them).

Post-firing is active along all three phases, although only a minimum firing contribute, with the aim of controlling the process fluid temperature, shall be used during phase 1 and 2, while during phase 3 it will provide the full heat duty required by process heating service. The necessary post-firing contribute in any phase shall be determined by an automatic control system the main function of which is to control the fluid service temperature and therefore to adapt the firing contribute during the different operating phases.

The hot air/flue gas stream is then sent to heat exchange with the process fluid and it is recycled back in the circuit to heat exchange with molten salts and controlled post-firing.

Together with firing contribute, the automatic control system determines also the fresh air stream required by fuel combustion and the purge stream, equal in mass to inlet fuel and fresh air stream, to be sent to stack to avoid the build-up of combustion products. During the inactive phase of the solar field the control system will also allow deviation, through an appropriate control valve, of a secondary hot air stream to be sent to heat exchange with cold molten salt, to eventually avoid molten salts cooling below a safe temperature (safely above condensation temperature).

The here described architecture and method for heating a process fluid up to a required temperature is suitable for substituting any fluid heating service up to a temperature of 550°C or slightly above.

The advantage of the proposed innovation is a meaningful reduction of the fuel consumption (in the order of 65%) and greenhouse gas emission compared to conventional heating systems.

These and various other characteristics and advantages of the present invention will be readly apparent to these skilled in the art upon reading the following detailed description of the preferred embodiments of the invention, and by referring to the accompanying drawings.

### Description of the drawings

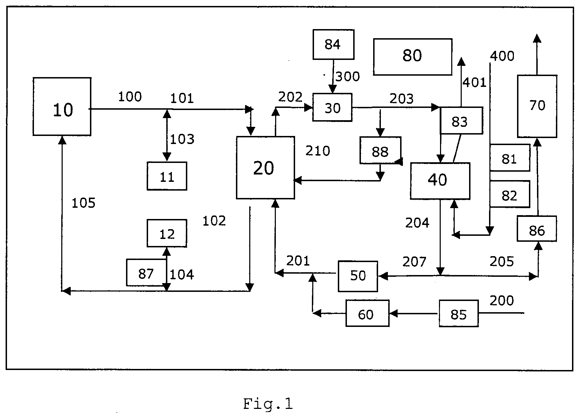

Fig. 1 is a schematic representation of the controlled heating system of a process fluid through concentrating solar thermal plant based on molten salts circulation and storage according to the present invention.

### Main Items:

10 Concentrating solar absorption field
11 Hot molten salts storage tank
12 Cold molten salts storage tank
20 heat exchanger (molten salts to heat carrier and vice-versa)
30 post-firing duct burners
40 heat exchanger (heat carrier to process fluid)
50 heat carrier circuit fan
60 fresh air inlet fan
70 stack
80 automatic control system
81 inlet fluid temperature measure
82 fluid flow-rate measure
83 outlet fluid temperature measure
84 fuel flow-rate control loop
85 fresh air flow-rate control loop
86 purge stream flow-rate control loop
87 cold molten salts temperature
88 heat carrier secondary stream valve

### Fluids:

100÷105 molten salts
200 fresh air inlet
201÷210 heat carrier fluid (air/flue gas)
300 fuel to post-firing
400÷401 process fluid to be heated up

### Detailed Description

As illustrated schematically in Fig. 1 main components of the full architecture of present invention consist of a concentrating solar thermal plant 10, a heat exchanger 20 between molten salts and heat carrier and a heat exchanger 40 between heat carrier and process fluid.

The concentrating solar field 10 and storage system 11 and 12 based on molten salt circulation and storage is designed for absorbing and storing the heat necessary for the active and storage phase (about 2/3 of the continuous operation time of the required process heating).

The solar collection system 10 comprises one or more tube radiation absorbers and a plurality of through collectors, such a single axis parabolic reflectors.

Alternatively, any suitable means for concentrating solar radiation, such as Fresnel collectors, may be provided. The thermal fluid is heated within the receiver tubes upon exposure to direct and concentrated solar radiation.

The hot thermal fluid 100 coming from solar field is stored in the hot storage tank 11 and then circulated by means of suitable pumps (not shown) to provide a heat source to the intermediate heat carrier stream 201 through a heat exchanger 20. The heat exchanger 20 transfers heat from molten salts to the heat carrier fluid during phase 1 and 2 (active and storage) while it is suitable also for transferring heat back to molten salts during phase 3 (inactive solar) to avoid molten salts cooling down below safe temperature (safely above condensation temperature).

The post-firing 30, realized by means of duct burners located inside the air duct, is capable of firing any capacity from 0% to 100%.

Heat release is calculated in continuous by control system 80 on the base of heat required by the process fluid 400 to reach its final controlled temperature 83. The firing contribute LHV is delivered as a flue gas stream 300 under flow control 84 in the heat carrier stream 202 for the subsequent delivery of heat carrier stream 203 to heat exchanger 40 with process fluid 400.

The heat exchanger 40 is capable to transfer heat from the heat carrier 203 to the process fluid 400 to reach the final temperature through temperature control 83.

The heat carrier circuit fan 50 is capable to provide the pressure head necessary to the heat carrier fluid necessary to win the circuit pressure drops.

The fresh air fan 60 is capable to admit the required fresh air flow 200 under automatic control by means of flow control 85.

The flow control loop 86 is capable to control the purge gas stream to be sent to stack 70. The control valve 88 permits to derive a heat carrier by-pass stream to allow temperature control of the cold molten salts circulating during CSP un-active phase.

## Claims

1. A controlled heating method of a process fluid through concentrating solar thermal plant (10) and heat carrier system **characterized in that**:
- the solar heat available from solar plant (10) is transmitted to a heat carrier stream constituted by air (201);
- the variable heat supplied by solar thermal plant to heat carrier air stream (201) is integrated with post-firing (30) of a fuel stream (300);
- the heat carrier stream (203) constituted by hot air and post-firing flue gas stream is circulated via a duct circuit through a heat exchanger (40) with the process fluid to allow reaching final required process fluid temperature;
the post-firing contribute being determined by an automatic control system (80) which controls in continuous the process fluid temperature and adapt the firing contribute during the different operating phases of the concentrating solar plant (10).

2. The controlled heating method of claim 1 in which a first heat exchanger (20) is transferring heat from molten salts to heat carrier stream (201) during solar plant active phases (direct radiation and storage period).

3. The controlled heating method of claim 1 and 2 in which said post-firing contribute can vary from 0 to full duty requirement.

4. The controlled heating method as per claim 1 through 3 in which a second heat exchanger (40) transfers heat from heat carrier (203) to a process fluid (400) up to a controlled final temperature (83).

5. The controlled heating method as per claim 1 through 4 in which process fluid is either a refinery fluid, a petrochemical process fluid, demineralized water, boiler feed water or steam.

6. The controlled heating method as per claim 1 through 5 in which fresh air flow (200) rate in the duct circuit is determined and admitted under automatic control by means of flow control (85) via a fan (60).

7. The controlled heating method as per claim 1 through 6 in which a purge stream to stack (70) is determined and discharged to stack under automatic control by means of a flow control loop (86).

8. The controlled heating method as per claim 1 through 7 in which the first heat exchanger (20) between molten salts and heat carrier stream can work reversely as a heater of cold molten salt during solar plant inactive phase.

9. The controlled heating method as per claim 1 through 8 in which a heat carrier secondary stream (210) is automatically sent through a control valve (88) to molten salts heat exchanger (20) to avoid cold molten salts solidification during solar plant inactive phase.

10. A controlled heating apparatus of a process fluid through concentrating solar thermal plant and a heat carrier circuit **characterized in that** it comprises:
a concentrating solar thermal plant (10) based on molten salts circulation;
a heat exchanger (20) to transfer heat from molten salts to a heat carrier fluid (201) during solar plant active phases;
a post-firing (30) to transfer heat to the heat carrier fluid (202) in output from exchanger (20);
a heat exchanger (40) to transfer heat from the heat carrier fluid (203) in output from post-firing (30) to the process fluid (400);
an automatic control system (80) to calculate the post-firing contribute with means for controlling in continuous the process fluid temperature in outlet (83) and for adapting the firing contribute during the different operating phases of the solar plant (10).

11. The apparatus according to claim 10 **characterized in that** the post-firing (30) is realized by means of duct burners located inside the air duct.

12. The apparatus according to claims 10 and 11 **characterized in that** it is provided a heat carrier circuit fan (50) capable to provide the pressure head necessary to the heat carrier fluid to win the circuit pressure drops.

13. The apparatus according to claims 10-12 **characterized in that** it is provided a fresh air fan (60) capable to admit the required fresh air flow (200) under automatic control by means of a flow control (85) into the heat carrier air-flue gas (201).

14. The apparatus according to claims 10-13, **characterized in that** it is provided a flow control loop (86) capable to control the purge gas stream to be sent to a stack (70).

15. The apparatus according to claims 10-14, **characterized in that** it is provided a control valve (88) which permits to derive a heat carrier by-pass stream (210) to allow temperature control of the cold molten salts circulating during CSP un-active phases.

## Patentansprüche

1. Gesteuertes Heizverfahren für eine Prozessflüssigkeit durch Bündelung mit einer solarthermischen Anlage (10) sowie Wärmeträgersystem, **dadurch gekennzeichnet, dass**:
- die von der Solaranlage (10) zur Verfügung stehende Sonnenwärme auf einen durch Luft (201) gebildeten Wärmeträgerstrom übertragen wird;
- die variable Wärme, die von der solarthermischen Anlage dem Wärmeträger-Luftstrom (201) zugeführt wird, mit einer Nachverbrennung (30) eines Abgasstroms (300) integriert ist;
- der Wärmeträgerstrom (203), der durch Heißluft und Nachverbrennungs-Abgasstroms gebildet wird, über einen Kanalkreislauf durch einen Wärmetauscher (40) mit der Prozessflüssigkeit zirkuliert wird, um ein Erreichen einer endgültigen erforderlichen Prozessflüssigkeitstemperatur zu ermöglichen;
wobei der Nachverbrennungsbeitrag durch ein automatisches Steuersystem (80) bestimmt wird, das die Temperatur der Prozessflüssigkeit kontinuierlich steuert und den Verbrennungsbeitrag während der verschiedenen Betriebsphasen der bündelnden Solaranlage (10) anpasst.

2. Gesteuertes Heizverfahren nach Anspruch 1, bei dem ein erster Wärmetauscher (20) die Wärme von geschmolzenen Salzen in den Wärmeträgerstrom (201) während aktiver Phasen (Direktstrahlung und Speicherperiode) der Solaranlage überträgt.

3. Gesteuertes Heizverfahren nach Anspruch 1 und 2, bei dem der Nachverbrennungsbeitrag von 0 bis zum vollen Einschaltbetrieb variieren kann.

4. Gesteuertes Heizverfahren nach Anspruch 1 bis 3, bei dem ein zweiter Wärmetauscher (40) Wärme von Wärmeträger (203) auf eine Prozessflüssigkeit (400) bis zu einer gesteuerten Endtemperatur (83) überträgt.

5. Gesteuertes Heizverfahren nach Anspruch 1 bis 4, bei dem die Prozessflüssigkeit entweder ein Raffineriefluid, ein petrochemisches Prozessfluid, demineralisiertes Wasser, Kesselspeisewasser oder Dampf ist.

6. Gesteuertes Heizverfahren nach Anspruch 1 bis 5, bei dem die Frischluftströmung (200) -Rate im Kanalkreislauf unter automatischer Steuerung mit Hilfe einer Strömungssteuerung (85) über ein Gebläse (60) bestimmt und zugelassen wird.

7. Gesteuertes Heizverfahren nach Anspruch 1 bis 6, bei dem ein Spülstrom zu einem Stapel (70) ermittelt und zum Stapel unter automatischer Steuerung mit Hilfe einer Strömungssteuerungsschleife (86) abgeführt wird.

8. Gesteuertes Heizverfahren nach Anspruch 1 bis 7, bei dem der erste Wärmetauscher (20) zwischen geschmolzenen Salzen und Wärmeträgerstrom umgekehrt als Erhitzer von kaltem geschmolzenen Salz während einer inaktiven Phase der Solaranlage arbeiten kann.

9. Gesteuertes Heizverfahren nach Anspruch 1 bis 8, bei dem ein Wärmeträger-Sekundärstrom (210) automatisch durch ein Steuerventil (88) zu einem Wärmetauscher (20) für geschmolzene Salze geleitet wird, um eine Verfestigung kalter geschmolzener Salze während der inaktiven Phase der Solaranlage zu vermeiden.

10. Vorrichtung für gesteuertes Heizen einer Prozessflüssigkeit durch Bündelung mit einer solarthermischen Anlage sowie ein Wärmeträgerkreislauf, **dadurch gekennzeichnet, dass** die Vorrichtung umfasst:
eine bündelnde solarthermische Anlage (10) auf Basis einer Zirkulation von geschmolzenen Salzen;
einen Wärmetauscher (20) zum Übertragen von Wärme von geschmolzenen Salzen auf eine Wärmeträgerflüssigkeit (201) während aktiver Phasen einer Solaranlage;
eine Nachverbrennung (30) zum Übertragen von Wärme auf die Wärmeträgerflüssigkeit (202) in der Ausgabe vom Wärmetauscher (20);
einen Wärmetauscher (40) zum Übertragen von Wärme von der Wärmeträgerflüssigkeit (203) in der Ausgabe von der Nachverbrennung (30) zu der Prozessflüssigkeit (400) ;
ein automatisches Steuerungssystem (80) zum Berechnen des Nachverbrennungsbeitrags mit einem Mittel zum kontinuierlichen Steuern der Temperatur der Prozessflüssigkeit in der Ausgabe (83) und zum Anpassen des Verbrennungsbeitrags während der verschiedenen Betriebsphasen der Solaranlage (10).

11. Vorrichtung nach Anspruch 10, **dadurch gekennzeichnet, dass** die Nachverbrennung (30) mittels Kanalbrennern, die sich innerhalb des Luftkanals befinden, realisiert ist.

12. Vorrichtung nach Ansprüchen 10 und 11, **dadurch gekennzeichnet, dass** sie mit einem Wärmeträgerkreislauf-Gebläse (50) versehen ist, der in der Lage ist, die Druckhöhe bereitzustellen, die für die Wärmeträgerflüssigkeit erforderlich ist, um die Druckabfälle des Kreislaufs zu gewinnen.

13. Vorrichtung nach Ansprüchen 10 bis 12, **dadurch gekennzeichnet, dass** sie mit einem Frischluftgebläse (60) versehen ist, das in der Lage ist, den erforderlichen Frischluftstrom (200) unter automatischer Steuerung mittels einer Strömungssteuerung (85) in das Wärmeträger-Abgas (201) einzubringen.

14. Vorrichtung nach Ansprüchen 10 bis 13, **dadurch gekennzeichnet, dass** sie mit einer Stromsteuerungsschleife (86) versehen ist, die in der Lage ist, den Spülgasstrom zu steuern, der zu einem Stapel (70) geleitet werden soll.

15. Vorrichtung nach Ansprüchen 10 bis 14, **dadurch gekennzeichnet, dass** sie mit einem Steuerventil (88) versehen ist, das es erlaubt, einen Wärmeträger-Bypass-Strom (210) abzuleiten, um eine Temperatursteuerung der kalten geschmolzenen Salze zu ermöglichen, die während der CSP-inaktiven Phasen zirkulieren.

## Revendications

1. Procédé de chauffage contrôlé d'un fluide de traitement par le biais d'une centrale solaire thermique à concentration (10) et d'un système caloporteur, **caractérisé en ce que** :
- la chaleur solaire disponible à partir de la centrale solaire (10) est transmise à un flux caloporteur constitué d'air (201) ;
- la chaleur variable délivrée par la centrale solaire thermique au flux d'air caloporteur (201) est intégrée un post-allumage (30) d'un flux de combustible (300) ;
- le flux caloporteur (203) constitué d'air chaud et d'un flux de gaz de combustion est mis en circulation par le biais d'un circuit de conduits à travers un échangeur de chaleur (40) avec le fluide de traitement pour permettre d'atteindre une température finale nécessaire du fluide de traitement ;
la contribution post-allumage étant déterminée par un système de commande automatique (80) qui commande en continu la température du fluide de traitement et adapte la contribution de l'allumage durant les différentes phases de fonctionnement de la centrale solaire thermique à concentration (10).

2. Procédé de chauffage contrôlé selon la revendication 1, dans lequel un premier échangeur de chaleur (20) transfère de la chaleur de sels fondus au flux caloporteur (201) durant des phases actives de la centrale solaire (période de rayonnement direct et de stockage).

3. Procédé de chauffage contrôlé selon les revendications 1 et 2, dans lequel ladite contribution post-allumage peut varier de 0 à une exigence de rendement total.

4. Procédé de chauffage contrôlé selon les revendications 1 à 3, dans lequel un deuxième échangeur de chaleur (40) transfère de la chaleur du caloporteur (203) à un fluide de traitement (400) jusqu'à une température finale contrôlée (83).

5. Procédé de chauffage contrôlé selon les revendications 1 à 4, dans lequel un fluide de traitement est soit un fluide de raffinerie, un fluide de traitement pétrochimique, de l'eau déminéralisée, de l'eau d'alimentation de chaudière ou de la vapeur.

6. Procédé de chauffage contrôlé selon les revendications 1 à 5, dans lequel un débit d'air frais (200) dans le circuit de conduits est déterminé et admis sous contrôle automatique au moyen d'une commande de débit (85) par le biais d'un ventilateur (60).

7. Procédé de chauffage contrôlé selon les revendications 1 à 6, dans lequel un flux de purge vers la cheminée (70) est déterminé et déchargé vers la cheminée sous contrôle automatique au moyen d'une boucle de régulation de débit (86).

8. Procédé de chauffage contrôlé selon les revendications 1 à 7, dans lequel le premier échangeur de chaleur (20) entre des sels fondus et le flux caloporteur peut fonctionner en inverse comme un réchauffeur de sels fondus froids durant la phase inactive de la centrale solaire.

9. Procédé de chauffage contrôlé selon les revendications 1 à 8, dans lequel un flux secondaire caloporteur (210) est envoyé automatiquement par le biais d'une vanne de régulation (88) à l'échangeur de chaleur des sels fondus (20) pour empêcher une solidification des sels fondus froids durant la phase inactive de la centrale solaire.

10. Appareil de chauffage contrôlé d'un fluide de traitement par le biais d'une centrale solaire thermique à concentration et d'un circuit de caloporteur, **caractérisé en ce qu'**il comprend :
une centrale solaire thermique à concentration (10) basée sur une circulation de sels fondus ;
un échangeur de chaleur (20) pour transférer de la chaleur de sels fondus au fluide caloporteur (201) durant des phases actives de la centrale solaire ;
un post-allumage (30) pour transférer de la chaleur au fluide caloporteur (202) en sortie de l'échangeur de chaleur (20) ;
un échangeur de chaleur (40) pour transférer de la chaleur provenant du fluide caloporteur (203) en sortie du post-allumage (30) vers le fluide de traitement (400) ;
un système de commande automatique (80) pour calculer la contribution post-allumage avec des moyens pour commander en continu la température du fluide de traitement en sortie (83) et pour adapter la contribution de l'allumage durant les différentes phases de fonctionnement de la centrale solaire (10).

11. Appareil selon la revendication 10, **caractérisé en ce que** le post-allumage (30) est réalisé au moyen de brûleurs en conduit situés à l'intérieur du conduit d'air.

12. Appareil selon les revendications 10 et 11, **caractérisé en ce qu'**il est prévu un ventilateur de circuit de caloporteur (50) adapté pour fournir la hauteur piézométrique nécessaire au fluide caloporteur pour vaincre les chutes de pression du circuit.

13. Appareil selon les revendications 10 à 12, **caractérisé en ce qu'**il est muni d'un ventilateur d'air frais (60) adapté pour admettre le flux d'air frais nécessaire (200) sous contrôle automatique au moyen d'une commande de débit (85) dans le gaz de combustion-air caloporteur (201).

14. Appareil selon les revendications 10 à 13, **caractérisé en ce qu'**il est muni d'une boucle de régulation de débit (86) adaptée pour réguler le flux de gaz de purge à envoyer à une cheminée (70).

15. Appareil selon les revendications 10 à 14, **caractérisé en ce qu'**il est muni d'une vanne de régulation (88) qui permet d'obtenir un flux de dérivation de caloporteur (210) pour permettre une régulation de température des sels fondus froids circulant durant des phases inactives de la centrale solaire à concentration.
